# EUROPÄISCHE PATENTANMELDUNG

(11) **EP 1 282 019 A2**
(43) Veröffentlichungstag der Anmeldung: **05.02.2003**
(21) Anmeldenummer: 02015722.8
(22) Anmeldetag: 12.07.2002
(51) Int. Cl.: G05B 19/05, G05B 19/042

(54) **Verfahren und Vorrichtung zur -berwachung einer insbesondere speicherprogrammierbaren Steuerung**

(30) Priorität: 01.08.2001 DE 10137671
(71) Anmelder: S.W.A.C. Schmitt-Walter Automation Consult GmbH, 82041 Oberhaching (DE)
(72) Erfinder: Schmitt-Walter, Stefan, Dipl.Ing., 82041 Oberhaching (DE)
(74) Vertreter: Grünecker, Kinkeldey, Stockmair & Schwanhäusser Anwaltssozietät

(57) **Zusammenfassung**

Ein Verfahren zur Überwachung einer insbesondere speicherprogrammierbaren Steuerung (SPS) mit einer Anzahl von über eine erste Busverbindung kommunizierenden Steuerungsbaugruppen, wie Hauptprozessorbaugruppe, Stromversorgungsbaugruppe und dergleichen, dient dazu, zumindest einen Datenaustausch der SPS über eine zweite Verbindung mit Feldgeräten zu überwachen. Eine entsprechende Überwachungsvorrichtung weist eine Anzahl von mit einer ersten Busverbindung kommunizierenden Steuerungsbaugruppen, wie Hauptprozessorbaugruppe, Speicherbaugruppe, Stromversorgungsbaugruppe, Ein/Ausgabebaugruppe, Feldbusbaugruppe oder dergleichen auf, wobei über eine zweite Verbindung mit zumindest einem Feldgerät Daten austauschbar und wenigstens diese überwachbar sind.

Um Verfahren und Vorrichtung dahingehend zu verbessern, dass mit einfachen Mitteln bei einer weiterhin sicheren Überwachung zumindest der Ablaufsteuerung der SPS die entsprechenden Zykluszeiten verringert werden, überwacht zusätzlich zur Hauptprozessorbaugruppe der SPS eine Überwachungsbaugruppe zumindest den Datenaustausch und gibt gegebenenfalls Fehlermeldung über wenigstens die erste Busverbindung aus. Vorrichtungsgemäß weist die Überwachungsvorrichtung eine Überwachungsbaugruppe mit einer Kommunikationsverbindung zur ersten Busverbindung auf, über welche Kommunikationsverbindung zumindest der Datenaustausch zwischen SPS und Feldgeräten abrufbar ist, wobei die Überwachungsbaugruppe eine Diagnoseeinrichtung zur Fehlererkennung aufweist.

## Beschreibung

Die Erfindung betrifft ein Verfahren und eine Vorrichtung zur Überwachung einer insbesondere speicherprogrammierbaren Steuerung. Eine solche Steuerung weist in der Regel eine Anzahl von Steuerbaugruppen auf, die über eine erste Busverbindung (i.d.R. Rückwandbus) kommunizieren. Solche Steuerbaugruppen sind beispielsweise Hauptprozessorbaugruppe, Stromversorgungsbaugruppe, Speicherbaugruppe, Eingabe/Ausgabe-Baugruppe, Feldbusbaugruppe oder dergleichen. Der Austausch von Daten mit entsprechenden Feldgeräten, wie Aktuatoren oder Sensoren, erfolgt über Baugruppen ohne eigene Intelligenz wie Ein-Ausgabebaugruppen oder aber über Baugruppen mit eigener Vorverarbeitung der Signale, sog. Intelligente Baugruppen, wie Feldbusanschaltungen o.ä.. In der Regel wird zumindest dieser Datenaustausch zwischen Feldgeräten und speicherprogrammierbarer Steuerung (SPS) und die zugehörige Ablaufsteuerung in der SPS überwacht.

Die SPS ist in der Regel in einer anwendungsorientierten Programmiersprache programmiert, um entsprechende Steuerungen durchzuführen. Durch die Programmiersprache wird die entsprechende Ablaufsteuerung oder Sequenz realisiert, die in einer festen Reihenfolge aus dem Speicher aufgerufen und in zyklischer Form bearbeitet wird. Am Anfang eines Zyklus werden die Peripherieeingangssignale eingelesen und in der Regel als sog. Prozeßabbild der Eingänge in einem internen Speicher festgehalten. Durch die im Programmspeicher programmierte Logik hervorgerufene Statusänderungen an den Ausgängen werden entweder sofort an diese ausgegeben oder ähnlich den Eingängen in einem internen Speicher zwischengespeichert (Prozessabbild der Ausgänge) und am Ende eines solchen Zyklus ausgegeben. Bei der Ablaufsteuerung werden eine Vielzahl von Programmschritten durchlaufen, wobei einige Programmschritte Überwachungen zumindest des Datenaustausches zwischen SPS und Feldgeräten betreffen. Eine solche Überwachung kann beispielsweise darin bestehen, dass bei einem Sensor als Feldgerät überprüft wird, ob sich dieser innerhalb einer gewissen Zeit meldet und Daten übermittelt. Bei einem Aktuator als Feldgerät kann weiterhin überprüft werden, ob dieser seine vorbestimmte Stellung eingenommen hat, das heißt, bei einem Ventil als Aktuator, ob dieses beispielsweise geschlossen ist.

Da die Überwachung durch die SPS und insbesondere durch die Hauptprozessorbaugruppe mit dem entsprechenden Hauptprozessor zusätzlich zur Abarbeitung des Ablaufprogramms durchgeführt wird, sind die Zykluszeiten zur Abarbeitung einer Sequenz des Ablaufprogramms entsprechend lang.

Der Erfindung liegt daher die Aufgabe zugrunde, bei einem Verfahren und eine Vorrichtung mit den Merkmalen der Oberbegriffe der Patentansprüche 1 bzw. 11, diese dahingehend zu verbessern, dass mit einfachen Mitteln bei einer weiterhin sicheren Überwachung zumindest der Ablaufsteuerung einer SPS die entsprechenden Zykluszeiten verringert werden.

Diese Aufgabe wird verfahrensmäßig dadurch gelöst, dass zusätzlich zur Hauptprozessorbaugruppe der SPS eine Überwachungsbaugruppe zumindest den Datenaustausch überwacht und gegebenenfalls Fehlermeldungen über wenigstens die erste Busverbindung ausgibt.

Vorrichtungsgemäß wird die Aufgabe dadurch gelöst, dass die Überwachungsvorrichtung eine Überwachungsbaugruppe mit einer Kommunikationsverbindung zur ersten Busverbindung aufweist, über welche Kommunikationsverbindung zumindest der Datenaustausch zwischen SPS und Feldgeräten abrufbar ist, wobei die Überwachungsbaugruppe eine Diagnoseeinrichtung zur Fehlererkennung aufweist.

Das heißt, durch das erfindungsgemäße Verfahren bzw. die Vorrichtung wird zusätzlich zur Hauptprozessorbaugruppe eine Überwachungsbaugruppe zur Verfügung gestellt, durch die der Datenaustausch und insbesondere Störungen in der Sequenz der Ablaufprogramme überwacht und erkannt werden. Solche Störungen in dem Ablaufprogramm werden beispielsweise dadurch erzeugt, dass ein Sensor als Feldgerät sich nicht meldet oder eine Aktuator als Feldgerät in einem falschen Zustand ist.

Durch diese Überwachungsbaugruppe zusätzlich zur Hauptprozessorbaugruppe werden Abarbeitung des Ablaufprogramms und des Überwachungs- bzw. Diagnoseprogramms voneinander getrennt durchgeführt, so dass die Hauptprozessorbaugruppe in einer geringeren Zykluszeit das Ablaufprogramm abarbeiten kann.

In diesem Zusammenhang ist es insbesondere von Vorteil, wenn die Überwachungsbaugruppe ein Ablaufprogramm der SPS überwacht und Störungen in der Ablaufprogrammsequenz detektiert und insbesondere diagnostiziert. Dies kann über die entsprechende Diagnoseeinrichtung der Überwachungsbaugruppe erfolgen.

Um im Wesentlichen direkt in Echtzeit und somit zykluszeitgetreu Überwachung und Diagnostizierung von Störungen durchführen zu können, kann die Überwachungsbaugruppe die Überwachung in demselben Zyklus wie die Abarbeitung des Ablaufprogramms durch den Hauptprozessor der Hauptprozessorbaugruppe durchführen. Dadurch wird eine entsprechende Störung und ein Fehler im gleichen Zyklus erkannt, in dem dieser Fehler bzw. die Störung auftritt. Dadurch erfolgt die Überwachung mit schnellstmöglicher Reaktionszeit und für die SPS und die durch sie gesteuerte Anlage ist die größte Sicherheit gegeben.

In der Regel weist die SPS ein Rack mit einer Anzahl von Steckplätzen auf. Jeder dieser Steckplätze kann eine entsprechende Baugruppe der SPS aufnehmen. Auf der Rückwand des Racks ist der Rückwandbus angeordnet, über den als erste Busverbindung die Kommunikation zwischen allen Baugruppen der SPS stattfindet. Die entsprechenden SPS-Baugruppen sind in der Regel als Steckkarten ausgebildet, die in die entsprechenden Steckplätze einsteckbar sind.

In diesem Zusammenhang kann zur erleichterten Anordnung der Überwachungsbaugruppe es als vorteilhaft angesehen werden, wenn diese als Zusatzsteckkarte mit insbesondere einem Coprozessor ausgebildet ist. Diese Zusatzsteckkarte ist ebenfalls in das Rack der SPS einsteckbar.

Um die Kommunikationsverbindung zwischen Zusatzsteckkarte und Rückwandbus zu vereinfachen, kann in Einsteckstellung der Zusatzsteckkarte die Kommunikationsverbindung zum Rückwandbus hergestellt sein. Das heißt, durch Einstecken der Zusatzstecker wird die Verbindung mit dem Rückwandbus hergestellt. Da die Überwachungsbaugruppe Zugriff auf den Rückwandbus hat, können durch diese Baugruppe alle über den Rückwandbus übermittelten Signale und/oder Daten überwacht werden. Das heißt, die erfindungsgemäße Überwachungsvorrichtung überwacht in Echtzeit alle über den Rückwandbus ausgetauschten Signale und diagnostiziert gegebenenfalls auftretende Fehler. Da über den Rückwandbus auch der gesamte Datenverkehr mit der Peripherie der SPS läuft, werden folglich auch alle Feldgeräte oder dergleichen im Peripheriebereich der SPS überwacht. Dadurch ist es möglich alle Eingabe/Ausgabe-Signale (E/A-Signale) aufzuzeichnen. Diese E/A-Signale können zentral über eine entsprechende E/A-Baugruppe bzw. Steckkarte im Rack der SPS zugeführt werden oder dezentral über entsprechende Bussysteme als zweite Verbindung eingesammelt und an eine E/A-Busbaugruppe im Rack der SPS übermittel werden. Diese Bussysteme sind beispielsweise Profibus, Interbus, Lokalbus, Feldbus oder dergleichen.

Um nicht nur den Austausch von Daten zwischen Hauptprozessor und Feldgerät oder dergleichen zu überwachen, kann die Zusatzsteckkarte bzw. die Überwachungsbaugruppe mit der Hauptprozessorbaugruppe, insbesondere zur Überwachung einer Programmstruktur des Hauptprozessors in Verbindung sein. Dadurch sind zumindest Zeitpunkt und Art der Änderung der Programmstruktur erfassbar. Die Erfassung kann jede Bit-Änderung betreffen und Änderungen im Programm bis auf die unterste Ebene sind protokollierbar. Die Verbindung zwischen Überwachungsbaugruppe und Hauptprozessorbaugruppe kann über eine andere Verbindung als den Rückwandbus erfolgen, wobei beispielsweise ein an der Hauptprozessorbaugruppe vorgesehener Programmierport zur Verbindung mit der Überwachungsbaugruppe herangezogen werden kann.

Um gegebenenfalls eine Protokollierung des Datenaustausches bzw. der Ablaufprogramme in den verschiedenen Zyklen zu ermöglichen, kann die Überwachungsbaugruppe zyklisch alle Eingänge/Ausgänge von/zu den Feldgeräten sowie eine Anzahl von Zyklen der Ablaufprogramme überwachen und insbesondere für eine vorgebbare Zeit speichern. Eine entsprechende Speichereinrichtung kann in der Überwachungsbaugruppe vorgesehen sein. Die gespeicherten Überwachungsdaten sind zur Dokumentierung oder dergleichen an die SPS übermittelbar.

Um entsprechende Daten der Überwachung nicht nur an die SPS sondern auch an andere Einrichtungen übertragen zu können, kann die Überwachungsbaugruppe mit einer externen Zusatzeinrichtung Daten über wenigstens eine entsprechende Schnittstelleneinrichtung austauschen. Eine solche externe Zusatzeinrichtung oder -gerät kann beispielsweise ein Computer, ein Datensichtgerät oder dergleichen sein.

Um einen Fehler bei den Daten bzw. im Ablaufprogramm nicht nur im gleichen Programmzyklus des Auftretens zu erkennen, sondern diesen auch mitzuteilen, kann die Überwachungsbaugruppe in einem Zyklus erfasste Fehler im selben Zyklus an insbesondere die Hauptprozessorbaugruppe melden.

Bei der Steuerung durch die SPS treten bestimmte Fehler auf, die als sogenannte Wischer bezeichnet werden. Dies sind insbesondere Meldungen von den Feldgeräten, die nur während einer Zykluszeit auftreten, aber in den vorangehenden und nachfolgenden Zyklen nicht vorhanden sind. Die Überwachungsbaugruppe gemäß Erfindung ist so ausbildbar, dass sie während nur eines Zyklus bei der Eingabe/Ausgabe aufgetretene Fehler als solche sogenannten Wischer diagnostiziert.

Um eine Verbindung mit Zusatzgeräten in einfacher Weise und mit einem bekannten Protokoll zu ermöglichen, kann die Überwachungsbaugruppe als Schnittstelleneinrichtung zumindest einen TCP/IP-Anschluss aufweisen. Über diesen sind Daten sowohl an das Zusatzgerät übermittelbar, als auch von diesem empfangbar. Es ist ebenfalls eine allgemeine Internetanbindung denkbar.

Die Übermittlung von Daten vom Zusatzgerät zur Überwachungsbaugruppe ist insbesondere dann von Vorteil, wenn die Überwachungs- und/oder Diagnoseeinrichtung der Überwachungsbaugruppe als Softwaremodul ausgebildet ist. Dieses Softwaremodul lässt sich auf diese Weise über den TCP/IP-Eingang oder auch andere Eingänge in die Überwachungsbaugruppe laden.

Um eine entsprechende Programmierung der Überwachungsbaugruppe im Hinblick auf die SPS zu vereinfachen, kann die Überwachungsbaugruppe in derselben Programmiersprache wie die Hauptprozessorbaugruppe programmiert werden und/oder eine Ablauflogik zur Überwachung darstellende Softwaremodule können einfach in die Überwachungsbaugruppe eingespeist und dort abgespeichert werden. Die Programmierung der Überwachungsbaugruppe ist weiterhin dadurch vereinfachbar, dass diese zumindest teilweise grafisch und/oder textuell durchführbar ist.

Es ist ebenfalls möglich, dass die Programmierung über ein insbesondere berührungssensitives Eingabegerät als Zusatzgerät erfolgt, dass in diesem Zusammenhang eine objektorientierte Programmierung der Überwachungsbaugruppe ermöglicht. Dieses Eingabegerät kann auch zur Darstellung von Meldungen von der Übergangsbaugruppe verwendet werden, indem beispielsweise entsprechende Icons oder dergleichen auf der entsprechenden Oberfläche des Zusatzgerätes bzw. Eingabegerätes dargestellt werden.

Im Zusammenhang mit der oben beschriebenen Erfassung von sogenannten Wischern und der zeitweiligen Abspeicherung der überwachten Daten/Signale durch die Überwachungsbaugruppe ist es möglich, dass diese im Wesentlichen als Eingabe/Ausgabe-Oszilloskop für die verschiedenen Eingänge und Ausgänge einsetzbar ist. Auf diese Weise können entsprechende Daten an den Ein- und Ausgängen über einen bestimmten Zeitraum, wie beispielsweise einen Tag, oszilloskopartig gespeichert und bei Wunsch dargestellt werden.

Die Überwachungsbaugruppe kann weiterhin so ausgebildet sein, dass sie Aufgaben übernimmt, die eigentlich der Hauptprozessorbaugruppe zugeordnet sind. Diese können je nach Auslastung der Hauptprozessorbaugruppe bzw. der Überwachungsbaugruppe verteilt werden. Über die Abarbeitung dieser Aufgabe kann die Überwachungsbaugruppe die Hauptprozessorbaugruppe beispielsweise in derselben oder nächsten Zykluszeit informieren, so dass der entsprechende Hauptprozessor zumindest in der nächsten Zykluszeit auf die entsprechende Ausgabe der Überwachungsbaugruppe reagieren kann.

Es ist selbstverständlich, dass die Überwachungsbaugruppe nicht nur über einen TCP/IP-Anschluss sondern ebenfalls über andere Anschlüsse verfügen kann, durch die beispielsweise XML-basierte Daten mittels eines Browsers sichtbar gemacht werden..

Insbesondere zur Dokumentierung der Überwachung durch die Überwachungsbaugruppe kann es als vorteilhaft angesehen werden, wenn die SPS mit einer übergeordneten Steuer- und/oder Programmiereinrichtung verbunden ist, an die von der Überwachungsbaugruppe über den Rückwandbus Daten übermittelbar sind. In das Rack der SPS kann zu diesem Zweck ein entsprechender Eingabe-/Ausgabebaustein zur Herstellung der Verbindung zwischen übergeordneter Einrichtung und SPS eingesteckt sein.

Zur Vereinfachung des Aufbaus und zur Raumersparnis ist es sicher als vorteilhaft anzusehen, wenn alle notwendigen Teile, wie Speicher, verschiedene Anschlüsse und dergleichen in der Überwachungsbaugruppe realisiert sind, so dass diese als Überwachungssteckkarte in ein Rack der SPS einfach einsteckbar ist. Es ist allerdings auch denkbar, dass die Überwachungsbaugruppe mehrteilig und insbesondere zweiteilig ausgebildet ist, wobei als ein Teil die Überwachungssteckkarte in ein Steckplatz der SPS einsteckbar ist und als weiterer Teil das mit der Überwachungssteckkarte verbundene, externe Zusatzgerät vorgesehen ist.

Erfindungsgemäß ist folglich ein Zugriff über den Rückwandbus auf alle Peripheriesignale der SPS über den der Überwachungsbaugruppe zugeordneten Coprozessor möglich, um dadurch die gleiche E/A-Information wie der Hauptprozessor zu erhalten. Durch die dem Coprozessor eigene Überwachungslogik wird der Hauptprozessor von jeglichen Überwachungsaufgaben entlastet und es wird ein schnellerer Abarbeitungsprozess, d.h. eine kürzere Zykluszeit für das entsprechende Ablaufprogramm bzw. die Ablaufsteuerung erhalten.

Im Folgenden wird ein vorteilhaftes Ausführungsbeispiel der Erfindung in der beigefügten Figur näher beschrieben.

Es zeigt:

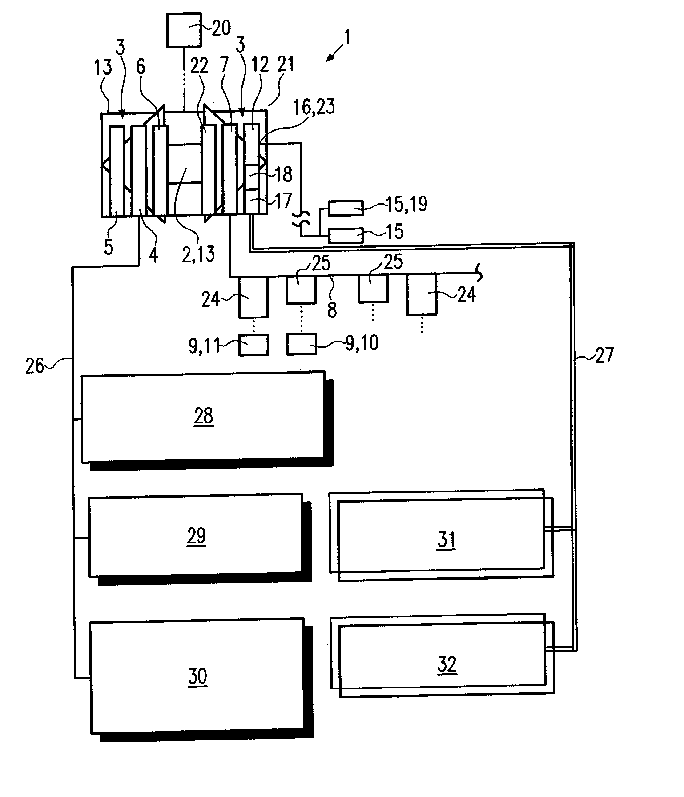

- Figur 1: eine Prinzipdarstellung der erfindungsgemäßen Überwachungsvorrichtung.

Eine speicherprogrammierbare Steuerung SPS 1 weist ein Rack 13 auf, in das eine Anzahl von Steuerungsbaugruppen 3 eingesteckt sind. Die Steuerungsbaugruppen 3 weisen beispielsweise eine Hauptprozessorbaugruppe 4, eine Stromversorgungsbaugruppe 5, eine Eingabe/Ausgabe-Baugruppe 6, eine Eingabe/Ausgabe-Busbaugruppe 7 und eine Speicherbaugruppe 22 auf. Diese sind in an sich bekannter Weise als Steckkarten ausgebildet, die in entsprechende Steckplätze des Racks 13 einsteckbar sind. Die Hauptprozessorbaugruppe 4 trägt unter anderem einen Hauptprozessor, der für die Abarbeitung eines Ablaufprogramms 26 zuständig ist.

An der Rückseite des Racks 13 ist als erste Busverbindung 2 ein Rückwandbus 13 vorgesehen. Alle vorangehend genannten Steuerungsbaugruppen 3 greifen auf den Rückwandbus 13 zur Kommunikation miteinander zu. Insbesondere die Hauptprozessorbaugruppe 4 kann weitere Anschlüsse aufweisen, wie beispielsweise einen Programmierport oder dergleichen.

Das Ablaufprogramm 26 ist in Fig. 1 symbolisch durch eine Linie dargestellt, die zyklisch und innerhalb einer gewissen Zykluszeit vom Hauptprozessor abgearbeitet wird. Seitlich neben der Linie sind beispielhaft drei Ablaufsteuersequenzen 28, 29 und 30 dargestellt, die im Weiteren näher erläutert werden.

Um Störungen in der Sequenz der Ablaufprogramme zu diagnostizieren und den Datenaustausch über den Rückwandbus 13 zu überwachen, ist als zusätzliche Einrichtung im Rack 13 eine Überwachungsbaugruppe 12 in Form einer Steckkarte eingesteckt. Diese Überwachungsbaugruppe bildet zumindest einen Teil einer Überwachungsvorrichtung 21. Die Überwachungsbaugruppe 12 weist in der Regel einen Coprozessor, eine Überwachungs-/Diagnoseeinrichtung 17 und gegebenenfalls eine Speichereinrichtung 18 auf. Die Überwachungs-/Diagnoseeinrichtung 17 kann als Softwaremodul ausgebildet sein, das in die Speichereinrichtung 18 eingeladen wird, um die Überwachungsbaugruppe 12 an bestimmte Überwachungs- und Diagnoseaufgaben im Hinblick auf die SPS anzupassen.

Die Überwachungsbaugruppe 12 überwacht den Datenaustausch über den Rückwandbus 13 bzw. diagnostiziert Störungen in der Sequenz der Ablaufprogramme in Echtzeit und damit zykluszeitgetreu mit der SPS. Ein entsprechender Fehler in der Ablaufprogrammsequenz wird im gleiche Zyklus erkannt, in dem er auftritt. Dadurch ist eine sehr schnelle Detektion und Diagnose möglich und die Anlagensicherheit der SPS ist maximiert.

Die Überwachungsbaugruppe kann über vorbestimmte Zeiträume, die beispielsweise eine Anzahl von Stunden, einen Tag oder auch mehrere Tage, den gesamten Datenverkehr über den Rückwandbus 13 protokollieren und entsprechende Fehler im Ablaufprogramm diagnostizieren. So ist es in einfacher Weise möglich, sogenannte Wischer, die bisher nur mit aufwendigen Zusatzprogrammen durch die Hauptprozessorbaugruppe 4 diagnostiziert werden konnten, ebenfalls zu erfassen. Als ein solcher Wischer wird eine Fehlinformation im Datenverkehr bezeichnet, die nur während eines Zyklus auftritt, aber in den vorangehenden und folgenden Zyklen nicht vorhanden ist.

Aufgrund der Protokollierung oder auch Dokumentierung des Datenverkehr und einer entsprechenden Diagnose der ausgetauschten Daten sowie von Störungen der Ablaufprogramme, ist die Überwachungsbaugruppe 12 ebenfalls als sogenanntes Eingabe/Ausgabe-Oszilloskop einsetzbar. Das heißt, über einen vorbestimmten Zeitraum werden alle Eingabe/Ausgabe-Daten oszilloskopartig erfasst und aufgezeichnet.

Über den Rückwandbus 13 bzw. auch über eine separate Verbindung zwischen Überwachungsbaugruppe 12 und Hauptprozessorbaugruppe 4 ist ebenfalls eine Überwachung der Programmstruktur des Hauptprozessors möglich. Solche Überwachung dient zur Erfassung und Protokollierung von Veränderungen des durch den Hauptprozessor abgearbeiteten Programms bis auf die unterste Ebene (Bit-Ebene). Dadurch können Änderungen im Hauptprozessor-Programm sowohl nach dem zeitlichen Auftreten als auch nach der Art erfasst werden. Mögliche Änderungen des Programms durch einen Benutzer sind somit sicher erfassbar und protokollierbar und erzeugen auf Wunsch vordefiniertes Antwortverhalten, wie z.B. sofortigen Stop der Abarbeitung.

Die Überwachungsbaugruppe 12 weist wenigstens eine Schnittstelleneinrichtung 16 auf, die beispielsweise als TCP/IP-Anschluss 13 ausgebildet sein kann. Über diesen Anschluss bzw. Schnittstelleneinrichtung erfolgt eine Kommunikation mit einer externen Zusatzeinrichtung 15. Ein Beispiel für eine solche Zusatzeinrichtung 15 ist ein insbesondere berührungssensitives Eingabegerät 19. Ein weiteres Beispiel für eine solche externe Zusatzeinrichtung oder -gerät ist ein Computer. Diese Kombination aus Überwachungsbaugruppe 12 und ein oder mehreren externen Zusatzeinrichtungen bildet insgesamt die Überwachungseinrichtung 21.

Das berührungssensitive Eingabegerät 19 dient beispielsweise zum Laden entsprechender Softwaremodule in die Überwachungsbaugruppe 12, zum Darstellen von Meldungen auf einer entsprechenden Oberfläche des Eingabegeräts 19, welche Meldungen von der Überwachungsbaugruppe 12 abgegeben werden, oder auch zur objektorientierten Programmierung der Überwachungsbaugruppe 12 beispielsweise durch vorgefertigte Templates oder auch textuell. Dabei kann die Programmierung in der Programmiersprache der jeweiligen SPS erfolgen.

Durch eine entsprechende Verbindung mit der Hauptprozessorbaugruppe 4 kann die Überwachungsbaugruppe 12 auch bestimmte Aufgaben des Hauptprozessors übernehmen. Durch diese Auslagerung von Aufgaben kann die Zykluszeit noch weiter vermindert werden im Vergleich zu der Zykluszeitverminderung, die sich bereits durch die Auslagerung der Überwachung und Diagnostizierung durch die Überwachungsbaugruppe 12 ergibt.

Mit der Eingabe/Ausgabe-Busbaugruppe 7 ist ein entsprechender Bus 8 als zweite Verbindung verbunden. Über den Bus 8, wie beispielsweise einen Profibus, Interbus, Lokalbus, Feldbus oder dergleichen, werden mit entsprechenden Feldgeräten 9 Daten ausgetauscht, wobei die Daten insgesamt über das entsprechende Bussystem 8 der Eingabe/Ausgabe-Busbaugruppe 7 zugeführt oder von dieser ausgegeben werden. Die Eingabe/Ausgabe-Baugruppe 6 wird zur direkten Verbindung mit einem entsprechenden Feldgerät verwendet, wobei selbstverständlich eine Vielzahl entsprechender Eingabe/Ausgabe-Baugruppen 6 vorgesehen sein können. Dies gilt analog auch für die anderen Steuerungsbaugruppen 3.

Die Feldgeräte 9 sind Aktuatoren 10 oder Sensoren 11. Ein solche Aktuator ist beispielsweise ein Ventil und ein solcher Sensor ist beispielsweise ein Endschalter. Mit dem Bussystem 8 sind die Feldgeräte 9 über entsprechende Eingänge 24 bzw. Ausgänge 25 verbunden. Von der Vielzahl mit dem Bussystem 8 kommunizierender Feldgeräte sind in Fig. 1 zur Vereinfachung nur zwei Feldgeräte 9 dargestellt.

Die Überwachungsbaugruppe 12 arbeitet das prinzipiell dargestellte Überwachungs-/Diagnoseprogramm 27 ab, zu dem zwei Sequenzfehler 31, 32 dargestellt sind, die sich bei den Ablaufsteuerungen 29 und 30 ergeben haben, wie im Folgenden näher erläutert wird.

Bei der Ablaufsteuerung 28 wird beispielsweise schrittweise im Ablaufprogramm festgestellt, dass ein Aktuator in einem ersten Schritt angesteuert wird. In einem zweiten Schritt wird eine Warteschleife durchlaufen, innerhalb der der Aktuator eine bestimmte Tätigkeit durchgeführt haben sollte. Innerhalb dieser Wartezeit wird der Aktuator von einem zugeordneten Sensor überwacht, der beispielsweise die erfolgte Bewegung eines Aktuators bis in eine Endstellung meldet. Erfolgt diese entsprechende Meldung innerhalb der Wartezeit, wird in einem abschließenden Schritt der entsprechende Aktuator deaktiviert.

Eine solche Ablaufsteuerung entspricht einem korrekten Ablauf der verschiedenen Sequenzen ohne Auftreten eines Sequenzfehlers.

In den Ablaufsteuerungen 29 und 30 werden nun verschiedene Sequenzfehler beschrieben.

Bei der Ablaufsteuerung 29 wird, wie bereits voranstehend im Zusammenhang mit der Ablaufsteuerung 28 beschrieben, wiederum in einem ersten Schritt ein Aktuator angesteuert und in einem zweiten Schritt eine Warteschleife durchlaufen. In dieser Warteschleife sollte ein Sensor eine bestimmte Tätigkeit des Aktuators melden. Erfolgt eine solche Meldung nicht, wird im Überwachungs-/Diagnoseprogramm 27 der Überwachungsbaugruppe 12 ein Sequenzfehler 31 erkannt. Dieser Fehler wird dem Hauptprozessor auf der Hauptprozessorbaugruppe 4 mitgeteilt. Je nach Art und Ort des Auftretens des Fehlers wird dann die Hauptprozessorbaugruppe 4 eine Fehlermeldung ausgeben, das Ablaufprogramm unterbrechen und die Anlage stillsetzen oder dergleichen.

In der Ablaufssteuerung 30 erfolgt wiederum eine Ansteuerung eines entsprechenden Aktuators und das Durchlaufen einer Warteschleife. Innerhalb der zugeordneten Wartezeit meldet der Sensor eine Tätigkeit des Aktuators, so dass in dem darauf folgenden Schritt der Aktuator abgeschaltet wird, obwohl in den nächsten Zyklen die Meldung des Sensors sich als falsch herausstellt. Dies ist das Auftreten eines sogenannten Wischers. Dieser Sequenzfehler 32 wird ebenfalls durch das Überwachungs-/Diagnoseprogramm 27 erfasst, wobei entsprechend die fehlerhafte Meldung des Sensors im ersten Zyklus und die korrekte Meldung in den nächsten Zyklen erfasst und die fehlerhafte Meldung des Sensors dem Hauptprozessor mitgeteilt wird. Diese Funktion der Überwachungsbaugruppe 12 entspricht im Wesentlichen einem Eingabe/Ausgabe-Oszilloskop. In Reaktion auf die Meldung des Sequenzfehlers 32 kann die Hauptprozessorbaugruppe 4 den entsprechenden Aktuator nochmals ansteuern, damit dieser seine korrekte Tätigkeit vollständig durchführt.

Erfindungsgemäß ergibt sich, dass die Überwachungsbaugruppe Zugriff auf alle Signale des Rückwandbusses hat und damit die gleichen Eingabe/Ausgabe-Informationen wie beispielsweise der Hauptprozessor erhält. Da die Überwachungsbaugruppe ein eigenes Überwachungs-/Diagnoseprogramm abarbeitet, wird der Hauptprozessor von entsprechenden Überwachungsaufgaben entlastet und die Zykluszeit wird vermindert. Wird ein Fehler von der Überwachungsbaugruppe detektiert, wird er noch im selben Zyklus des Auftretens an die Hauptprozessorbaugruppe gemeldet. Dadurch ergibt sich eine schnellstmögliche Reaktionszeit der gesamte Anlage und die größte Anlagensicherheit ist gegeben.

## Patentansprüche

1. Verfahren zur Überwachung einer insbesondere speicherprogrammierbaren Steuerung (SPS) (1) mit einer Anzahl von über eine erste Busverbindung (2) kommunizierenden Steuerungsbaugruppen (3), wie Hauptprozessorbaugruppe (4), Stromversorgungsbaugruppe (5) und dergleichen, wobei die SPS (1) über eine zweite Verbindung (8) Daten mit Feldgeräten (9, 10, 11) austauscht und zumindest dieser Datenaustausch überwacht wird, **dadurch gekennzeichnet, dass** zusätzlich zur Hauptprozessorbaugruppe (4) der SPS (1) eine Überwachungsbaugruppe (12) den Datenaustausch überwacht und gegebenenfalls Fehlermeldungen über wenigstens die erste Busverbindung (2) insbesondere an die Hauptprozessorbaugruppe (4) ausgibt.

2. Verfahren zur Überwachung nach Anspruch 1, **dadurch gekennzeichnet, dass** die Überwachungsbaugruppe (12) ein Ablaufprogramm der SPS (1) überwacht und Störungen in den Ablaufprogrammsequenzen detektiert und insbesondere diagnostiziert.

3. Verfahren zur Überwachung nach Anspruch 1 oder 2, **dadurch gekennzeichnet, dass** die Überwachungsbaugruppe (12) die Überwachung im selben Zyklus wie die Abarbeitung des Ablaufprogramms durchführt.

4. Verfahren zur Überwachung nach einem der vorangehenden Ansprüche, **dadurch gekennzeichnet, dass** die Überwachungsbaugruppe (12) zyklisch alle Eingänge/Ausgänge von/zu den Feldgräten (9, 10, 11 ) überwacht und entsprechende Daten insbesondere für eine vorgegebenen Zeit speichert.

5. Verfahren zur Überwachung nach einem der vorangehenden Ansprüche, **dadurch gekennzeichnet, dass** die Überwachungsbaugruppe (12) einen während nur eines Zyklus bei der Eingabe/Ausgabe erfassten Fehler als sogenannten Wischer diagnostiziert.

6. Verfahren zur Überwachung nach einem der vorangehenden Ansprüche, **dadurch gekennzeichnet, dass** die Überwachung durch die Überwachungsbaugruppe (12) direkt an der ersten Busverbindung (2) und insbesondere am Rückwandbus (13) der SPS (1) erfolgt, auf den alle Baugruppen (4, 5, 6, 7) der SPS (1) Zugriff haben.

7. Verfahren zur Überwachung nach einem der vorangehenden Ansprüche, **dadurch gekennzeichnet, dass** die Überwachungsbaugruppe (12) die Hauptprozessorbaugruppe (4) und insbesondere deren Programmstruktur überwacht und/oder Änderungen in der Programmstruktur bis auf die unterste Ebene protokolliert.

8. Verfahren zur Überwachung nach einem der vorangehenden Ansprüche, **dadurch gekennzeichnet, dass** die Überwachungsbaugruppe (12) einen in einem Zyklus erfasste Fehler im selben Zyklus an die Hauptprozessorbaugruppe (4) meldet.

9. Verfahren zur Überwachung nach einem der vorangehenden Ansprüche, **dadurch gekennzeichnet, dass** die Überwachungsbaugruppe (2) mit einer externen Zusatzeinrichtung (15) Daten über wenigstens eine entsprechende Schnittstelle (16) austauscht.

10. Verfahren zur Überwachung nach einem der vorangehenden Ansprüche, **dadurch gekennzeichnet, dass** die Überwachungsbaugruppe (12) in derselben Programmiersprache wie die Hauptprozessorbaugruppe (4) programmiert wird und/oder ein eine Ablauflogik zur Überwachung darstellendes Softwaremodul in der Überwachungsbaugruppe (12) eingespeichert wird.

11. Überwachungsvorrichtung (21) für eine insbesondere speicherprogrammierbare Steuerung (1) (SPS), welche eine Anzahl von mit einer ersten Busverbindung (2) kommunizierenden Steuerungsbaugruppen, wie Hauptprozessorbaugruppe (4), Speicherbaugruppe (22), Stromversorgungsbaugruppe (5), Ein/Ausgabe-Baugruppe (6), Feldbusbaugruppe (7) oder dergleichen, aufweist, wobei über eine zweite Verbindung (8) mit zumindest einem Feldgerät (9, 10, 11) Daten austauschbar und wenigsten diese überwachbar sind, **dadurch gekennzeichnet, dass** die Überwachungsvorrichtung (21) eine Überwachungsbaugruppe (12) mit einer Kommunikationsverbindung zu ersten Busverbindung (2) aufweist, über welche Kommunikationsverbindung zumindest der Datenaustausch zwischen SPS (1) und Feldgerät (9, 10, 11) abrufbar ist, wobei die Überwachungsbaugruppe (12) eine Diagnoseeinrichtung (17) aufweist.

12. Überwachungsvorrichtung nach Anspruch 11, **dadurch gekennzeichnet, dass** die erste Busverbindung (2) ein Rückwandbus (13) einer SPS (1) ist und/oder die SPS-Baugruppen (3, 4, 5, 6, 7, 22) als mit dem Rückwandbus (13) in Einsteckstellung kommunizierende Steckkarten und/oder Module ausgebildet sind.

13. Überwachungsvorrichtung nach Anspruch 11 oder 12, **dadurch gekennzeichnet, dass** die Überwachungsbaugruppe (12) als Zusatzsteckkarte mit insbesondere einem Coprozessor ausgebildet ist.

14. Überwachungsvorrichtung nach einem der vorangehenden Ansprüche 11 bis 13, **dadurch gekennzeichnet, dass** in Einsteckstellung der Zusatzsteckkarte (12) die Kommunikationsverbindung zum Rückwandbus (3) hergestellt ist.

15. Überwachungsvorrichtung nach einem der vorangehenden Ansprüche 11 bis 14, **dadurch gekennzeichnet, dass** durch die Zusatzsteckkarte (12) alle über den Rückwandbus (13) übermittelten Signal und/oder Daten überwachbar sind.

16. Überwachungsvorrichtung nach einem der vorangehenden Ansprüche 11 bis 15, **dadurch gekennzeichnet, dass** die Zusatzsteckkarte (12) mit der Hauptprozessorbaugruppe (4) insbesondere zur Überwachung einer Programmstruktur des Hauptprozessors in Verbindung ist.

17. Überwachungsvorrichtung nach einem der vorangehenden Ansprüche 11 bis 16, **dadurch gekennzeichnet, dass** ein Ablaufprogramm der Hauptprozessorbaugruppe (4) durch diese in einer vorbestimmten Zykluszeit abarbeitbar ist, und innerhalb derselben Zykluszeit die Überwachung durch die Überwachungsbaugruppe (12) durchführbar ist.

18. Überwachungsvorrichtung nach einem der vorangehenden Ansprüche 11 bis 17, **dadurch gekennzeichnet, dass** die Überwachungsbaugruppe (12) wenigsten eine Schnittstelleneinrichtung (16) aufweist.

19. Überwachungsvorrichtung nach einem der vorangehenden Ansprüche 11 bis 18, **dadurch gekennzeichnet, dass** die Schnittstelleneinrichtung eine TCP/IP-Schnittstelle ist.

20. Überwachungsvorrichtung nach einem der vorangehenden Ansprüche 11 bis 19, **dadurch gekennzeichnet, dass** die Überwachungsbaugruppe (12) wenigstens eine Speichereinrichtung (18) zur zeitweiligen Abspeicherung der von ihr überwachten Daten und/oder Signale aufweist.

21. Überwachungsvorrichtung nach einem der vorangehenden Ansprüche 11 bis 20, **dadurch gekennzeichnet, dass** die Überwachungsbaugruppe (12) eine Überwachungs- und/oder Diagnoseeinrichtung (17) zur zyklusgenauen Überwachung des und/oder zur Fehlermeldung an den Hauptprozessor aufweist.

22. Überwachungsvorrichtung nach einem der vorangehenden Ansprüche 11 bis 21, **dadurch gekennzeichnet, dass** die Überwachungs- und/oder Diagnoseeinrichtung (17) als Softwaremodul ausgebildet ist.

23. Überwachungsvorrichtung nach einem der vorangehenden Ansprüche 11 bis 22, **dadurch gekennzeichnet, dass** eine zumindest teilweise Programmierung der Überwachungsbaugruppe (12) grafisch und/oder textuell durchführbar ist.

24. Überwachungsvorrichtung nach einem der vorangehenden Ansprüche 11 bis 23, **dadurch gekennzeichnet, dass** ein insbesondere berührungssensitives Eingabegerät (19) als Zusatzeinrichtung zur zumindest teilweisen Programmierung der Überwachungsbaugruppe (12) und/oder zur Darstellung von Meldungen der Überwachungsbaugruppe mit dieser verbindbar ist.

25. Überwachungsvorrichtung nach einem der vorangehenden Ansprüche 11 bis 24, **dadurch gekennzeichnet, dass** die zweite Verbindung (8) ein sogenannter Profibus, Lokalbus, Feldbus oder dergleichen ist.

26. Überwachungsvorrichtung nach einem der vorangehenden Ansprüche 11 bis 25, **dadurch gekennzeichnet, dass** die SPS (1) mit einer übergeordneten Steuerund/oder Programmiereinrichtung (20) verbunden ist, an welche von der Überwachungsbaugruppe (12) über den Rückwandbus (13) Daten/Signale übermittelbar sind.

27. Überwachungsvorrichtung nach einem der vorangehenden Ansprüche 11 bis 26, **dadurch gekennzeichnet, dass** die Überwachungsbaugruppe (12) mehrteilig und insbesondere zweiteilig ausgebildet ist, wobei als ein Teil eine Überwachungssteckkarte in einen Steckplatz der SPS (1) einsteckbar ist und als anderer Teil ein mit der Überwachungssteckkarte verbundenes, externes Zusatzgerät (15) vorgesehen ist.
